(19) Europäisches Patentamt
European Patent Office
Office européen des brevets

(11) EP 0 827 984 A1

(12) EUROPÄISCHE PATENTANMELDUNG

(43) Veröffentlichungstag:
**11.03.1998 Patentblatt 1998/11**

(51) Int. Cl.[6]: **C09B 31/08**, C09B 62/09, C09B 43/132, C09B 29/095

(21) Anmeldenummer: **97114804.4**

(22) Anmeldetag: **27.08.1997**

(84) Benannte Vertragsstaaten:
**AT BE CH DE DK ES FI FR GB GR IE IT LI LU MC NL PT SE**
Benannte Erstreckungsstaaten:
**AL LT LV RO SI**

(30) Priorität: **09.09.1996 DE 19636540**

(71) Anmelder: **BAYER AG**
**51368 Leverkusen (DE)**

(72) Erfinder: **Kunde, Klaus, Dr.**
**53819 Neunkirchen-Seelscheid (DE)**

(54) **Amino-Niedrigalkyl-Naphthalinkarbonsäure-Farbstoffe**

(57) Die neuen Aminomethylnaphthalincarbonsäure-Farbstoffe der Formel (I)

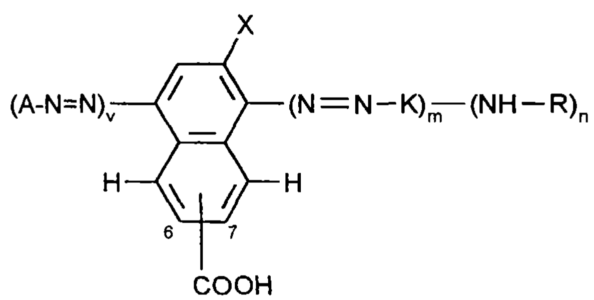

(I),

worin die Substituenten und Indices die in der Beschreibung angegebene Bedeutung haben, eignen sich vorzüglich zum Färben von cellulosehaltigen Materialien, insbesondere Papier.

EP 0 827 984 A1

## Beschreibung

Die vorliegende Erfindung betrifft neue Farbstoffe der allgemeinen Formel (I)

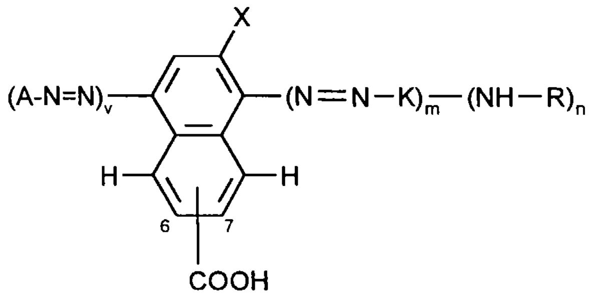

(I),

worin

A und K unabhängig voneinander für jeweils gegebenenfalls substituiertes Phenyl oder Naphthyl stehen,

R für Wasserstoff, einen unsubstituierten Acylrest oder einen 1,3,5-Triazin- oder Pyrimidinrest steht, welcher jeweils gleich oder verschieden durch Chlor, Fluor oder einen durch β-Sulfatoethylsulfonyl oder Vinylsulfonyl substituierten Anilin- oder Naphthylaminrest substituiert ist,

X für $C_1$-$C_3$-Alkyl steht,

die Carboxygruppe in Position 6 oder 7 gebunden ist,

m und n für 0 oder 1 stehen, wobei n für 1 steht, wenn m für 0 steht und

v für 0 oder 1 steht, mit der Maßgabe, daß $v + m \geq 1$ ist.

Bevorzugt sind Farbstoffe der allgemeinen Formel (I), worin

A für jeweils 1- bis 4-fach, gleich oder verschieden durch $CH_3$, OH, $OCH_3$, $SO_2C_2H_3$, $SO_2C_2H_4OSO_3H$, COOH, $SO_3H$ oder NHR' substituiertes Phenyl oder Naphthyl steht,
wobei

R' für Wasserstoff, einen unsubstituierten Acylrest oder einen 1,3,5-Triazin- oder Pyrimidinrest steht, welcher jeweils gleich oder verschieden durch Chlor, Fluor oder einen durch β-Sulfatoethylsulfonyl oder Vinylsulfonyl substituierten Anilin- oder Naphthylaminrest substituiert ist,
und

K für 1- bis 4-fach, gleich oder verschieden durch $CH_3$, OH, $OCH_3$, $OC_2H_5$, COOH, $SO_3H$, $NR_1R_2$ substituiertes Phenyl oder Naphthyl steht,
wobei $R_1$ und $R_2$ unabhängig voneinander für Wasserstoff, gegebenenfalls substituiertes $C_1$-$C_{18}$-Alkyl, Phenyl oder Naphthyl stehen.

Besonders bevorzugt sind Farbstoffe der Formel (I),
worin
die Carboxygruppe in Position 6 gebunden ist, und

X für $CH_3$ steht.

Bevorzugte Farbstoffe der allgemeinen Formel (I) sind weiterhin solche,
worin

A für Wasserstoff oder ein Rest der Formeln (III) bis (XIV)

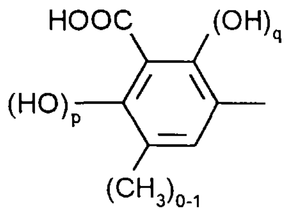 (III), 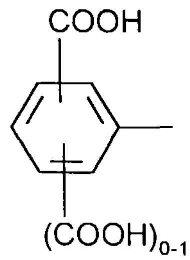 (IV),

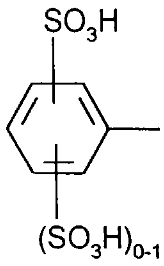 (V), 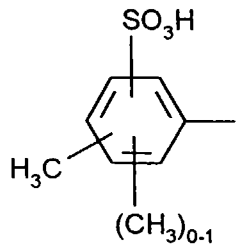 (VI),

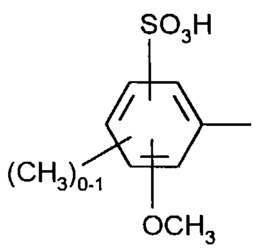 (VII), 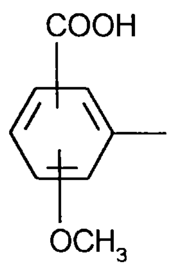 (VIII),

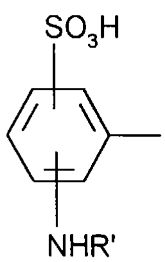 (IX), 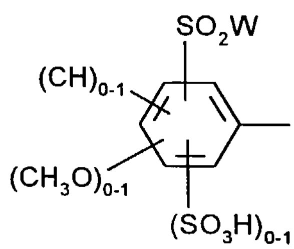 (X),

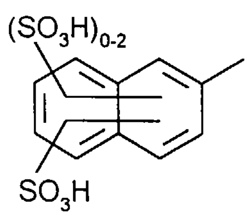 (XI), 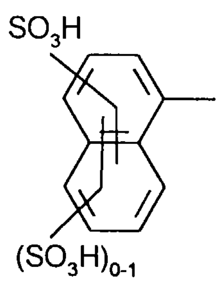 (XII),

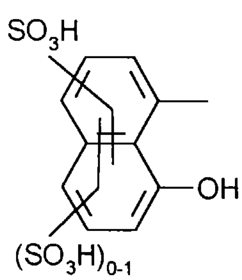 (XIII), 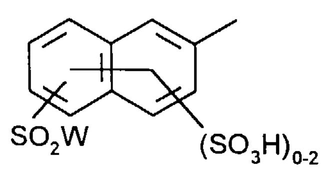 (XIX),

steht, wobei

| | |
|---|---|
| W | für $C_2H_4OSO_3H$ oder $C_2H_3$ steht, und |
| p und q | für 0 oder 1 stehen und $p + q = 1$ ist. |

Bevorzugt sind weiterhin Farbstoffe der allgemeinen Formel (I), worin

K für einen Rest der Formeln (XV) bis (XXI)

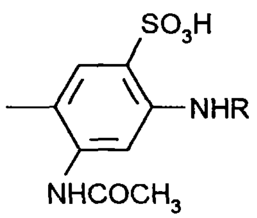 (XV),

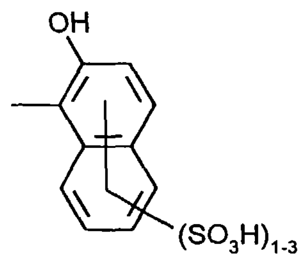 (XVI),

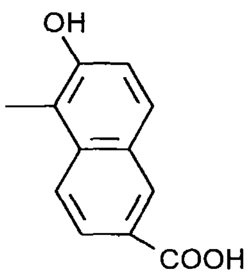 (XVII),

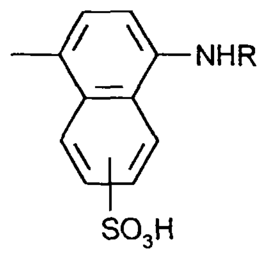 (XVIII),

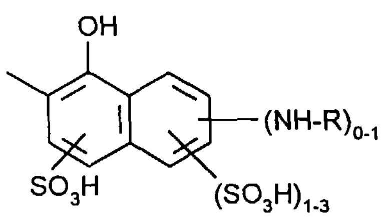 (XIX)

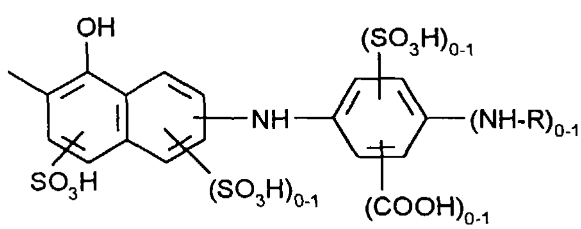 (XX),

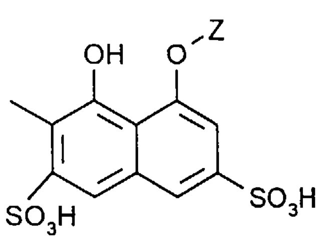 (XXI),

steht,

worin Z für Wasserstoff, $CH_3$ oder $C_2H_5$ steht.

Die Verwendung von Verbindungen der allgemeinen Formel (XXII)

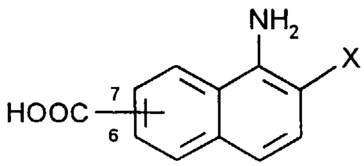

(XXII),

worin

X für $C_1$-$C_3$-Alkyl steht, und

die Carboxygruppe in 6- oder 7-Position gebunden ist,
als Diazo- oder Kupplungskomponente zur Herstellung von Azofarbstoffen ist neu und ebenfalls Gegenstand der vorliegenden Erfindung.

Die Verbindungen der allgemeinen Formel (XXII) können hergestellt werden, indem man Verbindungen der allgemeinen Formel (XXIII)

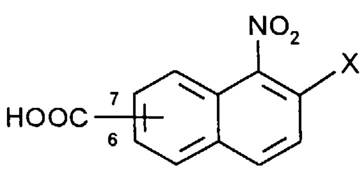

(XXIII),

worin

X für $C_1$-$C_3$-Alkyl steht, und

die Carboxygruppe in 6- oder 7-Position gebunden ist,
mit Wasserstoff in Gegenwart von Metall- oder Metalloxidkatalysatoren, vorzugsweise Raney-Nickel, reduziert. Die Reduktion erfolgt vorzugsweise in wäßriger, neutraler oder schwach alkalischer Lösung oder in einem organischen Lösungsmittel, vorzugsweise Methanol.

Die Herstellung der Verbindungen der allgemeinen Formel (XXIII) ist für X = $CH_3$ beschrieben (vgl. Klamann und Krämer, Chem. Ber. 93 (1960), 2316-2325), für X = $C_2H_5$ und $C_3H_7$ kann sie analog erfolgen.

Die erfindungsgemäßen Farbstoffe der Formel (I) mit m = 0, v = 1 können hergestellt werden, indem man Amine der Formel A-$NH_2$, worin A die oben angegebene Bedeutung hat, diazotiert und diese in an sich bekannter Weise mit den Verbindungen der allgemeinen Formel (XXII)

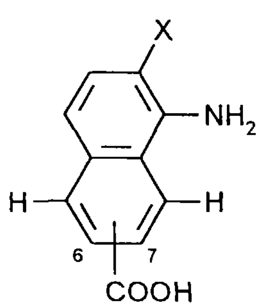

(XXII),

worin
die Carboxygruppe in 6- oder 7-Stellung gebunden ist, und

X für $C_1$-$C_3$-Alkyl steht

kuppelt und gegebenenfalls die Kupplungsprodukte entsprechend der Bedeutung des Substituenten R entweder acyliert oder mit den substituierten 1,3,5-Triazinen oder Pyrimidinen kondensiert.

Die erfindungsgemäßen Farbstoffe der allgemeinen Formel (I) mit m = 1, können hergestellt werden, indem man Verbindungen der allgemeinen Formel (XXV)

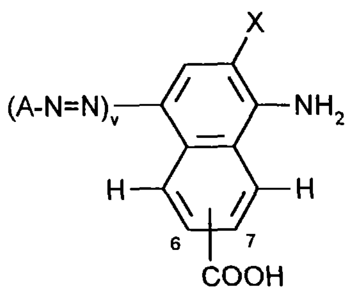

(XXV),

worin

X, A und v die oben angegebene Bedeutung haben,

und die Carboxygruppe in 6- oder 7-Stellung gebunden ist, in an sich bekannter Weise in die entsprechende Diazoniumverbindung überführt und diese mit einer Kupplungskomponente der allgemeinen Formel (XXIV)

$$H\text{-}K(NH\text{-}R)_n \quad \text{(XXIV)}$$

worin

K, R und n die oben angegebene Bedeutung haben,

in an sich bekannter Weise kuppelt.

Die erfindungsgemäßen Farbstoffe der allgemeinen Formel (I) eignen sich zum Färben und Bedrucken von cellulosehaltigen Materialien, insbesondere von Papier und Baumwolle.

Die Verwendung von Verbindungen der allgemeinen Formel (XXII) zur Herstellung von Azofarbstoffen ist neu. Sie können sowohl als Diazonium- wie auch als Kupplungskomponenten eingesetzt werden; bevorzugt ist ihre Verwendung als Mittelkomponente in Reihenkupplungen, d.h. nach Kupplung einer Diazoniumverbindung mit einer Verbindung der Formel (XXII) wird die erhaltene Aminoazoverbindung diazotiert, die so erhaltene Diazoniumverbindung wird mit einer Kupplungskomponente gekupppelt.

Die Kupplungskomponenten der Formel (XXIV) sind prinzipiell bekannt oder können in bekannter Weise hergestellt werden, mit Ausnahme der Kupplungskomponente der Formel

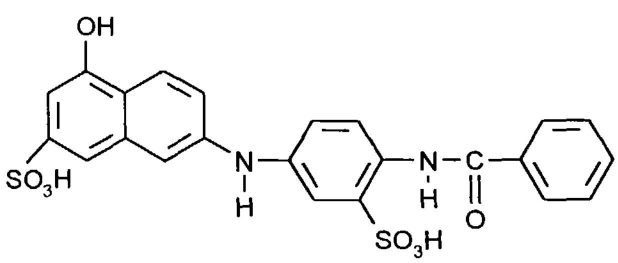

gemäß Beispiel 9 die neu und ebenfalls Gegenstand der vorliegenden Erfindung ist.

Die Diazotierung von Verbindungen der allgemeinen Formel (XXV) und Kupplung der so erhaltenen Diazoniumverbindungen mit Kupplungskomponenten der allgemeinen Formel (XXIV) erfolgen unter an sich bekannten Bedingungen

in wäßriger Lösung oder Suspension bei Temperaturen zwischen -5°C und 40°C; vorzugsweise zwischen 0°C und 20°C.

Kupplungen von Diazoniumverbindungen, die in bekannter Weise aus den Aminen A-$NH_2$ erhalten werden, mit Verbindungen der Formel (XXII) erfolgen vorzugsweise bei pH-Werten zwischen 0,5 und 5; besonders vorteilhaft sind pH-Werte zwischen 1 und 3 bei Temperaturen zwischen -5°C und 40°C; vorzugsweise zwischen 0°C und 20°C.

Die Verbindungen der allgemeinen Formel (XXII) haben gegenüber den bislang beschriebenen Aminonaphthalincarbonsäuren den Vorteil der besseren Zugänglichkeit, da die zur Herstellung der Verbindungen der Formel (XXIII) dienenden 1-Nitro-2,6-dialkylnaphthaline ihrerseits leicht aus den technisch verfügbaren 2,6-Dialkylnaphthalinen erhalten werden können; 2,6-Dialkylnaphthaline, z.B. das 2,6-Dimethylnaphthalin, sind Edukte für technisch genutzte Polyester aus 2,6-Naphthalindicarbonsäure. Darüberhinaus bieten die Verbindungen der allgemeinen Formel (XXII) bei ihrer Verwendung als Kupplungskomponente den Vorteil, daß nur eine Aminoazoverbindung erhalten werden kann, da eine Kupplung in ortho-Stellung zur Aminogruppe ausgeschlossen ist.

Die gegebenenfalls vorgenommene Kondensation von Farbstoffen der allgemeinen Formel (I) mit n = 1 und R = Wasserstoff mit Carbonsäurechloriden oder -anhydriden oder mit substituierten 1,3,5-Triazinen oder Pyrimidinen erfolgt unter an sich bekannten Bedingungen in wäßriger Lösung oder Suspension bei Temperaturen zwischen 0 und 80°C und pH-Werten zwischen 3 und 10, vorzugsweise zwischen 5 und 8.

Die Benzol- und Naphthalinderivate, die gemäß den erfindungsgemäßen Verfahren die Reste der allgemeinen Formeln (III) bis (XXI) liefern, sowie ihre Verwendung als Diazo- bzw. Kupplungskomponenten sind in der Literatur in extenso beschrieben.

Die erfindungsgemäßen Farbstoffe liefern auf cellulosehaltigen Materialien, insbesondere auf Papier und Baumwolle sowie Celluloseregenerat-Faser nach den üblichen Färbeverfahren lichtechte Färbungen bzw. Drucke.

Die Farbstoffe können nach allen in der Papier- und Textilindustrie für substantive Farbstoffe gebräuchlichen Verfahren verwendet werden, insbesondere in der Masse- wie in der Oberflächenfärbung von Papier für geleimte und ungeleimte Sorten, ausgehend von gebleichtem oder ungebleichtem Zellstoff verschiedener Provenienz wie Nadel- oder Laubholz-sulfit- und/oder -Sulfat-Zellstoff. Sie können auch in der Garn- oder Stückfärberei von Baumwolle, Viskose und Leinen nach dem Ausziehverfahren aus langer Flotte oder in Kontinueverfahren angewandt werden.

Zum Färben von Papier in der Masse können die Farbstoffe der Papierpulpe vor der Blattbildung zugesetzt werden, entweder dem Dickstoff nach dem Aufschlagen der Cellulose oder dem Dünnstoff vor dem Auflaufen auf die Papiermaschine. Bei der Herstellung von in der Masse geleimtem Papier werden sie vorzugsweise vor der Zugabe des Leimungsmittels dem Dünnstoff zugesetzt.

Bei der Oberflächenfärbung wird der Farbstoff nach der Blattbildung appliziert. Dies geschieht vorzugsweise in der Leimpresse, indem der Farbstoff in einer konzentrierten Stärkelösung aufgelöst und in dieser Form auf das Papier aufgebracht wird.

Die Farbstoffe der Formel (I) können eingesetzt werden als feste Farbstoffpräparationen, vorzugsweise als Pulver oder Granulate, die gegebenenfalls übliche Zusatzstoffe wie z.B. ionische oder nichtionische Einstellmittel und/oder Entstaubungsmittel, enthalten.

Für das erfindungsgemäße Verfahren bevorzugt ist die Verwendung flüssiger Präparationen, insbesondere die Verwendung von konzentrierten wässrigen Lösungen, die vorzugsweise frei sind von organischen Lösungsvermittlern und mindestens einen Farbstoff der allgemeinen Formel (I) enthalten. Die flüssigen Farbstoffpräparationen enthalten im allgemeinen 10 bis 40 Gew.-%, vorzugsweise 20 bis 40 Gew.-% an mindestens einem Farbstoff der Formel (I), bezogen auf die fertige Präparation.

**Beispiel 1**

23,1 g 6-Methyl-5-nitronaphthalin-2-carbonsäure und 10 g Natriumhydrogencarbonat werden in 500 ml Wasser gelöst und bei 25°C über wenig Raney-Nickel bei einem Wasserstoffdruck von 70 bar reduziert. Nach Beendigung der Reduktion wird der Katalysator abfiltriert, das Filtrat wird mit konz. Salzsäure bis zu einem pH-Wert von 2 angesäuert. Die ausgefällte 5-Amino-6-methylnaphthalin-2-carbonsäure wird abfiltriert und getrocknet.

**Beispiel 2**

45,9 g 4-Amino-5-phenylsulfonyloxynaphthalin-2,7-disulfonsäure werden in 500 ml Wasser bei 0 bis 5°C und einem pH-Wert von 1,5 bis 2 mit der äquimolaren Menge $NaNO_2$ diazotiert. Nach Zugabe von 20,1 g 5-Amino-6-methylnaphthalin-2-carbonsäure wird der pH-Wert der Suspension mit Soda-Lösung auf 3 gebracht. Die Kupplung ist sofort beendet. Der pH-Wert der Lösung des Kupplungsproduktes wird mit Salzsäure auf 1,5 gebracht, dann wird bei 0 bis 5°C mit der äquimolaren Menge $NaNO_2$ weiter diazotiert.

40,0 g 4-Hydroxy-7-(4'-amino-3'-sulfophenylamino)-naphthalin-2-sulfonsäure werden mit Soda-Lösung bei 10°C und einem pH-Wert von 9 in 500 ml Wasser gelöst. Die obige Suspension der Diazoniumverbindung wird langsam

zugegeben, wobei der pH-Wert der Kupplungslösung mit Soda-Lösung konstant gehalten wird. Die Kupplung ist sofort beendet. Das Kupplungsprodukt ist in Lösung, es entspricht der folgenden Formel:

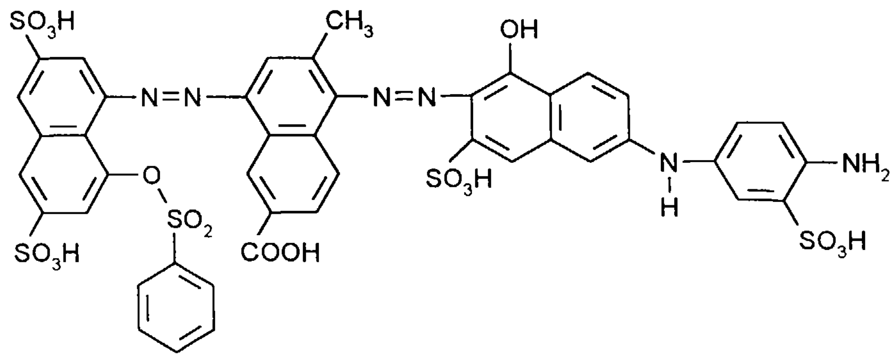

**Beispiel 3**

Die Lösung des Kupplungsproduktes aus Beispiel 2 wird auf 80°C erhitzt, dann wird der pH-Wert mit konz. Natronlauge auf 11,5 gebracht. Nach Beendigung der Hydrolyse des Benzolsulfonsäureesters wird der pH-Wert der Lösung mit Salzsäure auf 7 gebracht. Der Farbstoff wird durch Zugabe von NaCl ausgefällt, isoliert und getrocknet, er entspricht der folgenden Formel:

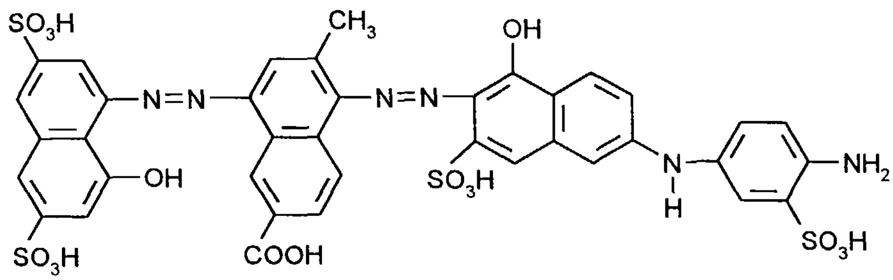

$\lambda_{max} = 613$ nm

Er färbt Papier, Baumwolle und Viskose grünstichig-blau mit sehr guter Lichtechtheit.

**Beispiel 4**

Der pH-Wert der Lösung des Kupplungsproduktes aus Beispiel 2 wird mit Salzsäure auf 6 gebracht, dann werden bei 25 bis 30°C 21,1 g Benzoylchlorid zugetropft, wobei der pH-Wert mit Soda-Lösung konstant gehalten wird. Nach Beendigung der Kondensation wird die Lösung auf 80°C erhitzt, dann wird der pH-Wert mit konz. Natronlauge auf 10,5 gebracht und solange gehalten, bis der Benzolsulfonsäureester vollständig hydrolysiert ist. Nun wird der pH-Wert mit Salzsäure auf 7 gebracht. Der Farbstoff wird durch Zugabe von NaCl ausgefällt, isoliert und getrocknet, er entspricht der folgenden Formel:

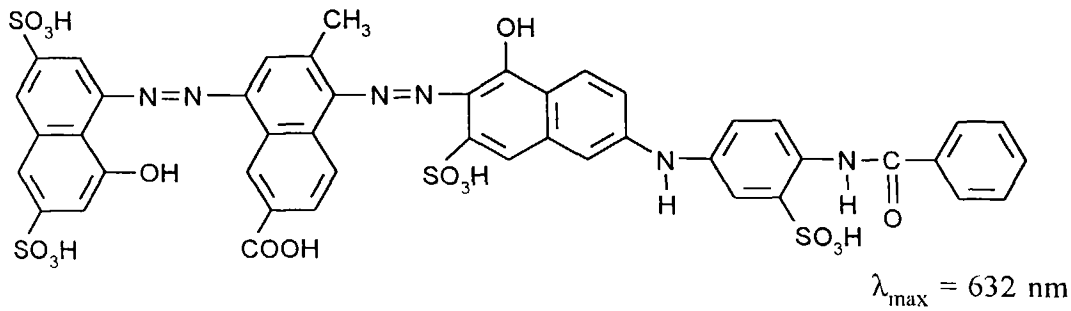

$\lambda_{max}$ = 632 nm

Er färbt Papier, Baumwolle und Viskose grünstichig-blau mit sehr guter Lichtechtheit.

**Beispiel 5**

Die Lösung des Kupplungsprodukts aus Beispiel 2 wird auf 80°C erhitzt, dann wird der pH-Wert mit konz. Natronlauge auf 11,5 gebracht. Nach Beendigung der Hydrolyse des Benzolsulfonsäureesters wird der pH-Wert der Lösung mit Salzsäure auf 6 gebracht. Die Lösung wird auf 15°C gekühlt und mit 18,6 g Cyanurchlorid versetzt. Während der Kondensation wird der pH-Wert mit Soda-Lösung auf 6 gehalten. Nach Beendigung der Kondensation wird die Lösung auf 40°C erwärmt, dann werden 16,3 g Metanilsäure zugesetzt. Auch während dieser Kondensation wird der pH-Wert mit Soda-Lösung auf 6 gehalten. Nach Beendigung der Kondensation wird der Farbstoff mit NaCl ausgefällt, isoliert und getrocknet, er entspricht der nachfolgenden Formel:

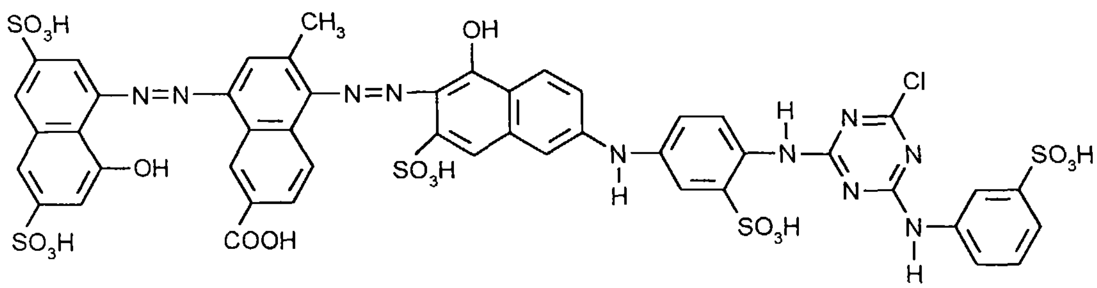

$\lambda_{max}$ = 634 nm

Er färbt Baumwolle und Viskose grünstichig-blau mit sehr guter Lichtechtheit.

**Beispiele 6, 7 und 8**

Verwendet man statt der in Beispiel 2 eingesetzten zweiten Kupplungskomponente äquimolaren Mengen 4-Hydroxy-7-(phenylamino)-naphthalin-2-sulfonsäure, 4-Hydroxy-7-(3'-carboxyphenylamino)-naphthalin-3-sulfonsäure oder 4-Hydroxy-7-(4'-carboxyphenylamino)-naphthalin-2-sulfonsäure, so erhält man Farbstoffe, die Papier, Baumwolle und Viskose mit sehr guter Lichtechtheit blau färben.

| | |
|---|---|
| Beispiel 6: | $\lambda_{max}$ = 604 nm |
| Beispiel 7: | $\lambda_{max}$ = 604 nm |
| Beispiel 8: | $\lambda_{max}$ = 605 nm |

**Beispiel 9**

40,0 g 4-Hydroxy-7-(4'-amino-3'-sulfophenylamino)-naphthalin-2-sulfonsäure werden mit Soda-Lösung bei 25°C

und einem pH-Wert von 6 in 500 ml Wasser gelöst, dann werden 17,5 g Benzoylchlorid zugetropft, wobei der pH-Wert mit Soda-Lösung konstant gehalten wird. Das Kondensationsprodukt entspricht der folgenden Formel:

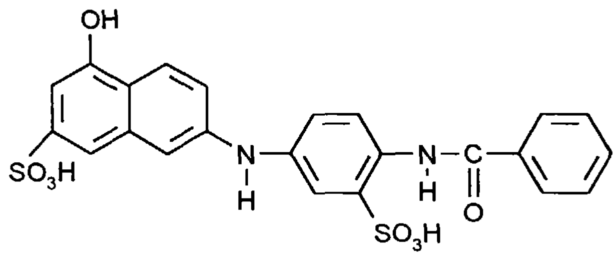

$^1$H-NMR für das Dinatriumsalz in $D_6$-DMSO:

δ = 6,93 (s, 1H); 7,2 (d, 1H); 7,26 (d, 1H); 7,34 (d, 2H); 7,54 - 7,64 (m, 4H); 7,95 (m, 3H); 8,42 (d, 1H); 8,48 (s, 1H); 10,05 (s, 1H); 11,23 (s, 1H).

**Beispiele 10 - 16**

Verwendet man statt der in Beispiel 2 eingesetzten Diazo- und der zweiten Kupplungskomponente äquimolare Mengen der in der folgenden Tabelle angegebenen Verbindungen, so erhält man ebenfalls Farbstoffe, die Papier, Baumwolle und Viskose mit guter bis sehr guter Lichtechtheit in den angegebenen Farbtönen anfärben.

| Beispiel | Diazokomponente | 2. Kupplungskomponente | Farbton |
|---|---|---|---|
| 10 | 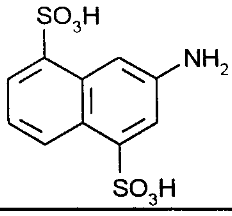 | 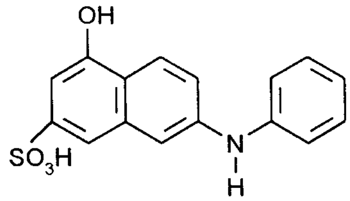 | rotstichig-blau $\lambda_{max}$= 572 nm |
| 11 | 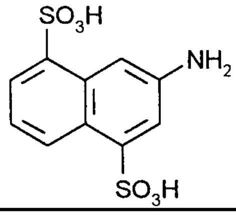 | 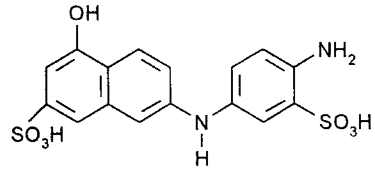 | blau $\lambda_{max}$= 585 nm |
| 12 | 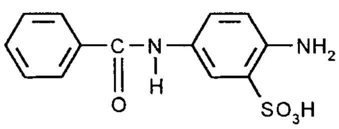 | 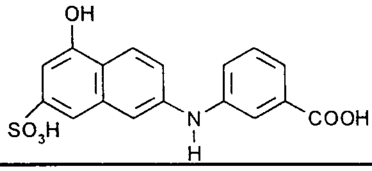 | rotstichig-blau $\lambda_{max}$= 578 nm |
| 13 | 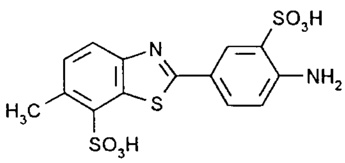 | 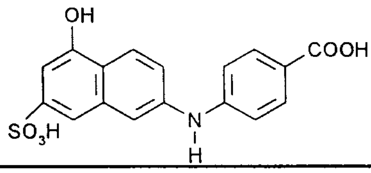 | rotstichig-blau $\lambda_{max}$= 571 nm |
| 14 | 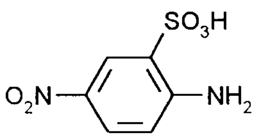 | 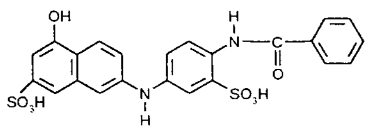 | blau $\lambda_{max}$= 584 nm |
| 15 | 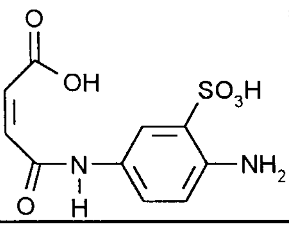 *) | 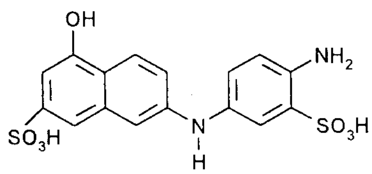 | blau $\lambda_{max}$= 582 nm |
| 16 | 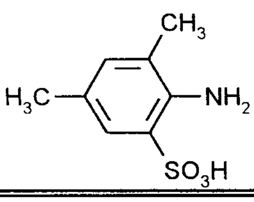 | 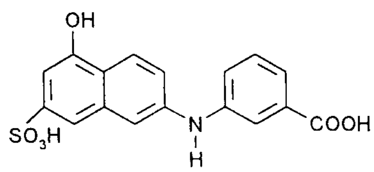 | violett $\lambda_{max}$= 559 nm |

*) Der Maleinylrest wird nach der zweiten Kupplung durch alkalische Hydrolyse abgespalten.

## Patentansprüche

1. Farbstoffe der allgemeinen Formel (I)

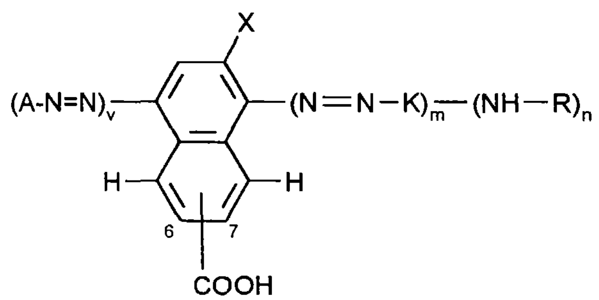

(I),

worin

A und K unabhängig voneinander für jeweils gegebenenfalls substituiertes Phenyl oder Naphthyl stehen,

R für Wasserstoff, einen unsubstituierten Acylrest oder einen 1,3,5-Triazin- oder Pyrimidinrest steht, welcher jeweils gleich oder verschieden durch Chlor, Fluor oder einen durch β-Sulfatoethylsulfonyl oder Vinylsulfonyl substituierten Anilin- oder Naphthylaminrest substituiert ist,

X für $C_1$-$C_3$-Alkyl steht,

die Carboxygruppe in Position 6 oder 7 gebunden ist,

m und n für 0 oder 1 stehen, wobei n für 1 steht, wenn m für 0 steht und

v für 0 oder 1 steht, mit der Maßgabe, daß $v + m \geq 1$ ist.

2. Farbstoffe gemäß Anspruch 1, worin

A für jeweils 1- bis 4-fach, gleich oder verschieden durch $CH_3$, OH, $OCH_3$, $SO_2C_2H_3$, $SO_2C_2H_4OSO_3H$, COOH, $SO_3H$ oder NHR' substituiertes Phenyl oder Naphthyl steht, wobei

R' für Wasserstoff, einen unsubstituierten Acylrest oder einen 1,3,5-Triazin- oder Pyrimidinrest steht, welcher jeweils gleich oder verschieden durch Chlor, Fluor oder einen durch β-Sulfatoethylsulfonyl oder Vinylsulfonyl substituierten Anilin- oder Naphthylaminrest substituiert ist,

K für 1- bis 4-fach, gleich oder verschieden durch $CH_3$, OH, $OCH_3$, $OC_2H_5$, COOH, $SO_3H$, $NR_1R_2$ substituiertes Phenyl oder Naphthyl steht, worin

$R_1$ und $R_2$ unabhängig voneinander für Wasserstoff, gegebenenfalls substituiertes $C_1$-$C_{18}$-Alkyl, Phenyl oder Naphthyl stehen.

3. Farbstoffe gemäß Ansprüchen 1 und 2, worin die Carboxygruppe in 6-Stellung gebunden ist und

X für $CH_3$ steht.

4. Farbstoffe gemäß Ansprüchen 1 bis 3, worin

A für Wasserstoff oder ein Rest der Formeln (III) bis (XIV)

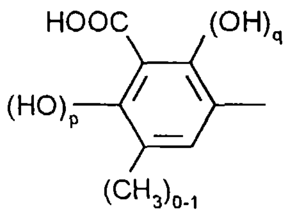 (III), 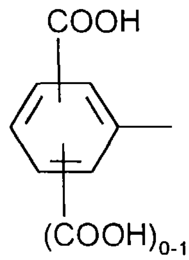 (IV),

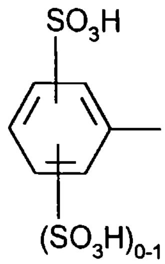 (V), 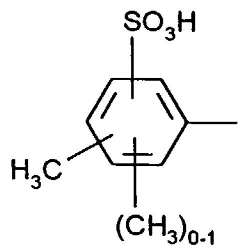 (VI),

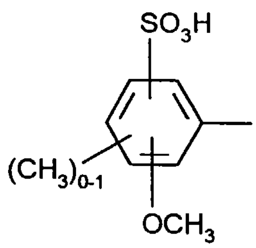 (VII), 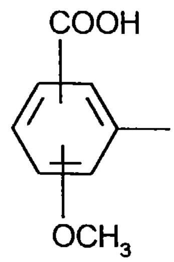 (VIII),

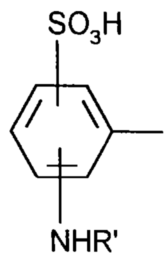 (IX), 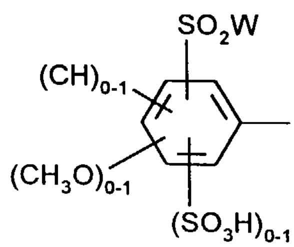 (X),

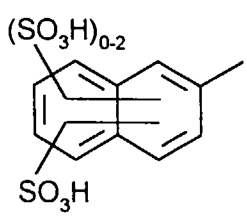 (XI), 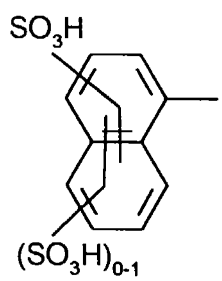 (XII),

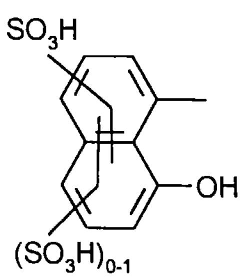 (XIII), 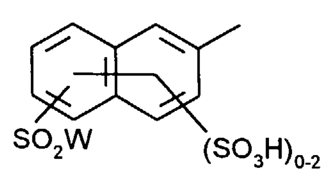 (XIV),

steht, wobei

W für $C_2H_4OSO_3H$ oder $C_2H_3$ steht, und
p und q für 0 oder 1 stehen und $p + q = 1$ ist.

**5.** Farbstoffe gemäß Anspruch 1 bis 4, worin

K für einen Rest der Formeln (XV) bis (XXI)

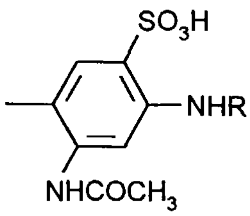
(XV),

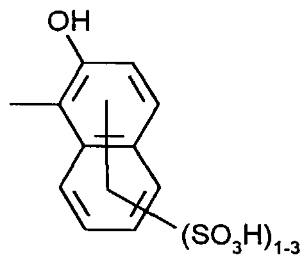
(XVI),

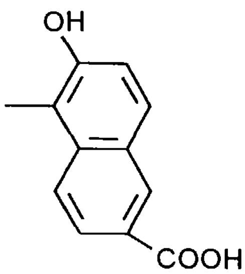
(XVII),

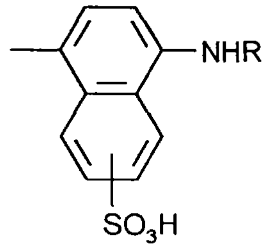
(XVIII),

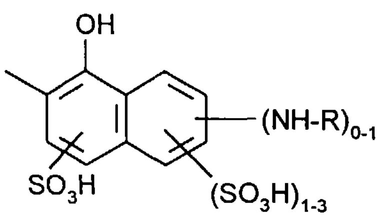
(XIX)

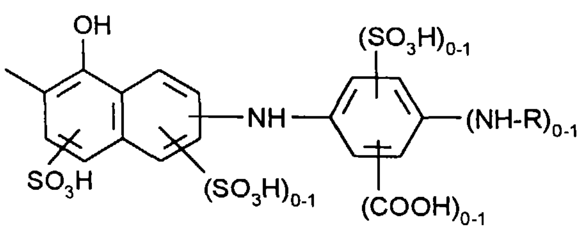
(XX),

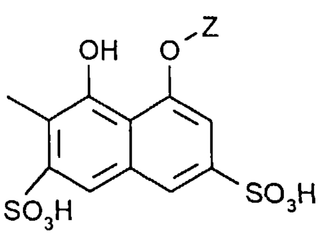
(XXI),

steht,
worin Z für Wasserstoff, $CH_3$ oder $C_2H_5$ steht.

**6.** Verfahren zur Herstellung von Farbstoffen gemäß Anspruch 1 mit m = 0, v = 1, dadurch gekennzeichnet, daß man Amine der Formel $A\text{-}NH_2$, worin A die in Anspruch 1 angegebenen Bedeutung hat, in an sich bekannter Weise in

die Diazoniumverbindungen überführt und diese in an sich bekannter Weise mit den Verbindungen der allgemeinen Formel (XXII)

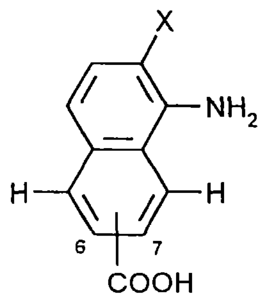

(XXII),

worin
die Carboxygruppe in 6- oder 7-Stellung gebunden ist, und

X die in Anspruch 1 angegebene Bedeutung hat,

kuppelt und gegebenenfalls die Kupplungsprodukte entsprechend der Bedeutung von R entweder acyliert oder mit substituierten 1,3,5-Triazinen oder Pyrimidinen kondensiert.

**7.** Verfahren zur Herstellung der Farbstoffe gemäß Anspruch 1 mit m = 1, dadurch gekennzeichnet, daß man Verbindungen der allgemeinen Formel (XXV)

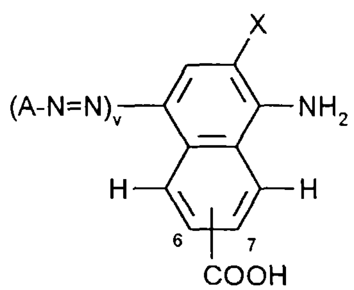

(XXV),

worin

Y, X und v die in Anspruch 1 angegebene Bedeutung haben, und

die Carboxygruppe in 6- oder 7-Stellung gebunden ist,
in an sich bekannter Weise in die entsprechende Diazoniumverbindung überführt und diese mit einer Kupplungskomponente der allgemeinen Formel (XXIV)

$$H\text{-}K(NH\text{-}R)_n \qquad (XXIV)$$

worin

K, R und n die in Anspruch 1 angegebene Bedeutung haben,

in an sich bekannter Weise kuppelt.

**8.** Verwendung der Farbstoffe gemäß Anspruch 1 zum Färben und Bedrucken von cellulosehaltigen Materialien, insbesondere von Papier und Baumwolle.

**9.** Verbindung der Formel

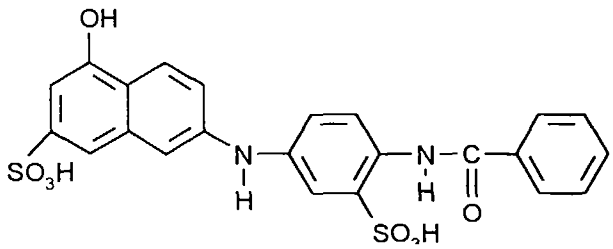

Europäisches Patentamt

# EUROPÄISCHER RECHERCHENBERICHT

Nummer der Anmeldung
EP 97 11 4804

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 534 903 A (CIBA-GEIGY AG)<br>* Seite 2, Zeile 43 *<br>* Seite 9, Zeile 33 - Zeile 36; Anspruch 1 *<br>--- | 1-9 | C09B31/08<br>C09B62/09<br>C09B43/132<br>C09B29/095 |
| A | WO 95 00592 A (ZENECA LIMITED)<br>* Seite 3, Zeile 12 - Zeile 34 *<br>* Seite 5, Tabelle 1, Farbstoffe 1,2 *<br>* Zusammenfassung *<br>--- | 1-8 | |
| P,A | EP 0 735 106 A (BAYER AG)<br>* Seite 2, Zeile 3 - Zeile 5 *<br>* Beispiele 12,13 *<br>--- | 1-8 | |
| A | EP 0 356 080 A (ICI PLC)<br>* Zusammenfassung *<br>* Seite 4; Tabellen *<br>--- | 1-8 | |
| A | US 4 963 189 A (S. L. HINDAGOLLA)<br>* Spalte 1, Zeile 54 - Spalte 2, Zeile 68 *<br>--- | 1-8 | **RECHERCHIERTE SACHGEBIETE (Int.Cl.6)** |
| A | WO 91 08265 A (HOECHST AG)<br>* Seite 8, Formel 6 *<br>* Seite 13, Zeile 25 - Seite 14, Zeile 8 *<br>--- | 1,8 | C09B |
| A | EP 0 622 424 A (BAYER AG)<br>* Seite 1, Zeile 1 - Seite 7, Zeile 6 *<br>--- | 1,8 | |
| A | K. SCHANK: "alpha-Pyridyl-glyoxal"<br>CHEMISCHE BERICHTE,<br>Bd. 102, Nr. 2, 1969,<br>Seiten 383-712, XP002049652<br>* Seite 511, Tab. 1, oberster Farbstoff *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 15.Dezember 1997 | Ketterer, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)